# EUROPEAN PATENT SPECIFICATION

(11) **EP 4 516 438 B1**
(45) Date of publication and mention of the grant of the patent: **08.04.2026**
(21) Application number: 23194842.3
(22) Date of filing: 01.09.2023
(51) Int. Cl.: B23G 5/06, B23P 15/52

(54) **THREAD CUTTING TAP WITH TEXTURED NECK SURFACE**
GEWINDEBOHRER MIT TEXTURIERTER HALSOBERFLÄCHE
TARAUD AVEC SURFACE DE COL TEXTURÉE

(43) Date of publication of application: 05.03.2025
(73) Proprietor: AB Sandvik Coromant, 811 81 Sandviken (SE)
(72) Inventor: Jagadale, Kiran, 811 81 Sandviken (SE)
(74) Representative: Sandvik

(56) References cited:
- EP-A1- 4 197 692
- CN-U- 207 681 660
- DE-U1- 202005 020 758

## Description

### TECHNICAL FIELD

The invention relates to metal cutting, and in particular to thread cutting taps for cutting internal threads in holes in metal workpieces. The invention also relates to a method for manufacturing such thread cutting taps.

### BACKGROUND ART

In the field of metal cutting, a thread cutting tap may be used for machining an internal thread in a hole in a workpiece. Thread cutting taps sometimes have a "neck" with reduced diameter, located between the shank and the threaded front portion of the tap. Such thread cutting taps often include chip flutes extending along the threaded front portion and into the neck portion. The flutes may be helical in order to improve evacuation of chips from the threaded hole.

An example of such a thread cutting tap is known from EP 4 197 692 A1. In some materials, such as low alloy steels or aluminum, the chips produced may easily entangle around the tap, causing so called "bird nests" of chips around the neck of the tap. If using straight-fluted taps, the problem of bird nesting can be reduced, but on the other hand such taps may not provide sufficient chip evacuation.

Hence, there is a need for thread cutting taps with improved chip control.

### SUMMARY

It is an object of the present invention to mitigate the shortcomings of the prior art and to provide a thread cutting tap with improved chip control and a method for manufacturing such thread cutting tap.

Thus, according to a first aspect, the invention relates to thread cutting tap that comprises a front end, a rear end, a longitudinal axis extending from the front end to the rear end, a thread cutting portion extending rearward along the longitudinal axis from the front end, and a shank extending forward along the longitudinal axis from the rear end. The thread cutting tap further comprises a neck portion located between the thread cutting portion and the shank, wherein the neck portion comprises a plurality of lands separated from each other by a corresponding number of flutes. At least a part of at least one of the lands in the neck portion has a textured surface comprising a plurality of protrusions, each protrusion extending radially outwards from a neck bottom to a protrusion peak.

Such protrusions may improve chip control and help mitigating entangling of chips around the neck portion that may otherwise occur when machining materials that produces long chips, such as low alloy steel, stainless steel or aluminum. Accordingly, the protrusions are arranged to break or deflect chips formed when using the thread cutting tap to cut a thread in a hole in a workpiece.

Flutes formed in the thread cutting portion may continue into the neck portion, and extend axially along at least a part thereof, but not necessarily along the full axial length of the neck portion. In other words, the neck portion may include a region near the shank that is devoid of flutes. The textured surface may be present also on such fluteless regions of the neck portion.

The flutes may be helical such that the flutes and the lands extend axially along the neck portion (and the thread cutting portion) following a curved helical path around the longitudinal axis (i.e. the rotation axis of the tap), with this path deviating from the longitudinal axis by a helix angle. As an example, such helix angle may be 30° or above, e.g. 45° or even higher. The problem of bird nesting of chips in the neck portion is more common for thread cutting taps having large helix angle, and the present invention may therefore be most beneficial in view of such thread cutting taps. However, it is also envisaged that the flutes have a smaller helix angle, or even flutes that are straight, i.e. aligned generally in parallel to the longitudinal axis of the tap.

The neck portion is formed at a diameter smaller than the diameter of the thread cutting portion. More specifically, the neck portion has a diameter that is smaller than the cutting diameter not only at the crest but also at the root of each thread cutting tooth, such that no part of the neck portion engages the surface of the threaded hole during machining. Hence, the intersections between the lands and the flutes in the neck portion do not form cutting edges. The purpose of the neck portion is to facilitate thread cutting deep down in a hole with maintained chip evacuation. As already mentioned, the flutes in the neck portion are usually continuations of the flutes formed in the thread cutting portion, such that the cutting lands, including cutting teeth, in the thread cutting portion smoothly transitions into the non-cutting lands in the neck portion.

The neck portion should have a neck diameter that is small enough to not interfere in the cutting process, but large enough to maintain a sufficient strength and stability of the thread cutting tap. For example, the neck portion may have a neck diameter that is in a range of 0.6-0.8 times the maximum cutting diameter of the thread cutting portion.

The protrusions in the neck portion may be formed by subtractive machining, e.g. cutting, or by a cold forming process, such as knurling. A cold forming process will, as a result of forming depressions in the surface, result in protrusions between the depressions that protrude not only with respect to the bottoms of the depressions but also, to some extent, with respect to the original surface. However, the protrusions do not necessarily extend radially beyond the original (not yet textured) surface, but may constitute protrusions only with respect to the adjacent depressions formed in the surface, as would be the case if forming depressions by subtractive manufacturing (cutting). Thus, according to some embodiments, the protrusions may be considered as the portions located between depressions formed in the surface, irrespective of how these depressions were formed. However, it is also envisaged that the protrusions are formed in a different way not involving the formation of depressions in the surface.

The protrusions protrude radially outwards, meaning that the protrusion may extend along a protrusion extension axis that has at least some component in a radial direction with respect to the longitudinal axis of the thread cutting tap. According to some embodiments, for each protrusion, such protrusion extension axis is perpendicular to and intersects the longitudinal axis of the thread cutting tap. In other words, a protrusion extension axis of each protrusion may be directed entirely in a radial direction.

The "neck bottom" should be understood as the imaginary surface on which the points on the lands of the neck portion closest to the longitudinal axis are located (i.e. points in the "valleys" between the protrusions. For a cylindrical neck portion, the neck bottom would constitute a circular cylindrical surface that includes all such valley points. The protrusion peak of each protrusion should be understood as the point or surface segment of the protrusion that is located farthest from the longitudinal axis, thus defining the (maximum) diameter of the neck portion.

The neck portion may adjoin the thread cutting portion, either directly or via a transition region (e.g. a region in which the diameter smoothly changes from a thread cutting diameter to a reduced diameter of the neck portion).

The axial length of the neck portion in relation to the axial length of the thread cutting portion may vary for different types of thread cutting taps. The axial length of the neck portion may be greater than the axial length of the thread cutting portion. For example, the axial length of the neck portion may be at least twice the axial length of the cutting portion.

The thread cutting tap may be made from a wear resistant material, such as cemented carbide or high speed steel.

According to some embodiments, the textured surface covers a major part of each land in the neck portion. Thereby, the chip control is further increased compared to a thread cutting tap wherein only a small part of the lands in the neck portion is textured. The textured surface may for example completely cover each land in the neck portion.

According to some embodiments, each protrusion comprises a first surface and a second surface, adjoining each other at a first edge extending from the neck bottom to the protrusion peak. Such edge of the protrusion may increase the chip control by improving the chip breaking. Thus, the edge may act as a knife breaking the chips into smaller pieces.

According to some embodiments, the first surface and the second surface face forward, and each protrusion comprises also a third surface and a fourth surface each facing rearward. The first surface adjoins the third surface at a second edge extending from the neck bottom to the protrusion peak, and the second surface adjoins the fourth surface at a third edge extending from the neck bottom to the protrusion peak. Thereby, each protrusion includes a plurality of edges that help breaking the chips.

A surface "facing forward" in this context means that a normal to the surface has a component in the forward direction (a direction along the longitudinal axis towards the front end of the thread cutting tap) but not in the rearward direction (a direction along the longitudinal axis towards the rear end of the thread cutting tap). As an example, each of the first and second surfaces may have respective normals that, if broken into a longitudinal component, a radial component and a tangential component, has a longitudinal component in the forward direction. Correspondingly, a surface "facing rearward" should be understood as a surface of which a normal has a component in the rearward direction.

According to some embodiments, the first surface forms an internal angle of 30°- 90° to the second surface. Protrusions having such configuration may be easy to manufacture and will provide sufficiently sharp edges for obtaining a good chip dividing effect.

According to some embodiments, each protrusion may have the shape of a truncated pyramid having a square or rhombic bottom base at the neck bottom and a top base at the protrusion peak and wherein the first, second, third and fourth surfaces make up the lateral faces of the truncated pyramid, and wherein the protrusion extends along a protrusion extension axis from the centroid of the bottom base to the centroid of the top base.

For each protrusion, a normal to the first surface or the second surface, when projected on a longitudinal plane perpendicular to a radial line through the protrusion, may form an angle of 30°-75° to the longitudinal axis of the thread cutting tap, for example 45° or 60°. The first and the second surfaces may be symmetrically arranged with respect to the longitudinal axis, i.e. such that the first edge, when projected on the longitudinal plane, extends in parallel with the longitudinal axis of the thread cutting tap. In other words, for a protrusion having the shape of a truncated pyramid, one of the diagonals of the bottom base may be parallel to the longitudinal axis of the thread cutting tap.

Each protrusion has a protrusion height, corresponding to the minimum distance between the neck bottom to the protrusion peak. According to some embodiments, the protrusion height is within a range of 0.05-0.35 times the diameter of the neck portion. Accordingly, different protrusion heights may be used for different tool diameters. The protrusions shall be sufficiently large for effectively breaking the chips. A larger thread cutting tap produces larger chips that requires larger protrusions for effective chip control. For small thread cutting taps, for example taps having a neck diameter in the range of 4-6 mm, the protrusion height may be as small as 0.75 mm. For large thread cutting taps, such as taps having a neck diameter of 30 mm or more, the protrusion height may be 3 mm or even more. A protrusion height in the range of 1-3 mm may be suitable for many thread cutting taps.

The diameter of the neck portion should be understood as the diameter at which the protrusion peaks are located. This may correspond to the diameter of the unmodified neck, i.e. the neck before protrusions are formed, but the diameter may also be somewhat greater than the diameter of the original neck, in particular if the protrusions are formed by a cold forming process, such a knurling. Nevertheless, the neck diameter will still be smaller than the cutting diameter of the thread cutting portion of the tap.

According to some embodiments, all, or substantially all, of the protrusions have the same size and shape and are distributed over the textured surface in a pattern. Thereby, a uniform chip breaking effect is obtained all over the textured surface. The pattern may be defined by a recurrence of the protrusions at a certain pitch. According to some embodiments, the pitch is within a range of 0.1-0.5 times the diameter of the neck portion.

"Substantially all of the protrusions" in this case should be understood as all protrusions that are not affected by other features on the neck, such as the flutes. In other words, some protrusions adjacent the flutes, or adjacent axial front- or rear ends of the neck, may have somewhat different and possibly irregular shapes, for example due to that parts of the protrusions may have been removed when grinding the flutes.

The pitch is measured between consecutive protrusion peaks along the textured surface. If the protrusions are applied using a knurling tool, the pitch corresponds to the pitch of the knurling tool, i.e. the distance between teeth of the knurling tool in a direction perpendicular to the extension of such teeth.

According to some embodiments, the protrusion height of each protrusion is 0.5 - 0.8 times the pitch. A pattern of protrusions having such relationship between pitch and protrusion height may be particularly effective for achieving improved chip control.

According to some embodiments, the pattern of the textured surface is formed by two sets of trenches, the two sets extending along the neck portion helicoidally, but in different directions, around the longitudinal axis of the thread cutting tap, such that a trench of the first set intersects a trench of the second set at an angle of 30°-120°, and wherein the regions between the respective trenches form the protrusions. Such configuration may result in protrusions having the shape of truncated pyramids. For example, a trench of the first set may intersect a trench of the second set at an angle of 60°, 90° or 120°, in particular if the trenches are made by a conventional knurling tool that often has knurling teeth that extend at an angle of 30°, 45° or 60° to a rotational axis thereof. However, it is also envisaged that a trench of the first set intersects a trench of the second set at some other angle, including an angle smaller than 60°.

According to some embodiments, the textured surface is a knurled surface. Thus, the protrusions may be formed by a knurling process in which a knurling tool engages the neck portion of the thread cutting tap in order to form the protrusions. For example, a knurling tool using two wheels, one with left-hand teeth and one with right-hand teeth, may be used for creating two sets of intersecting trenches as referred to above, resulting in a pattern of protrusions shaped as truncated pyramids. Such knurls are sometimes referred to as "diamond knurls" since the rhombus- or square shaped bases of the pyramids together form a diamond-pattern. The teeth on such knurling wheels may for example be formed at an angle of 30° or 45° to the rotation axis of the wheel, resulting in protrusions having a shape of pyramids with rhombic bases (with the major diagonal of each rhombus directed in parallel with the longitudinal axis of the thread cutting tap) or protrusions having a shape of pyramids with square bases, respectively.

The protrusions can be formed by other means, for example by milling or laser machining.

According to another aspect, the invention relates to a method for manufacturing a thread cutting tap according to any of the embodiments described herein wherein the textured surface is a knurled surface, the method comprising the steps of:
- providing a blank that includes
   - a front end,
   - a rear end, and
   - a peripheral surface, wherein the peripheral surface extends from the front end to the rear end around a central longitudinal axis;
- forming a neck portion in the peripheral surface of the blank, the neck portion having a smaller diameter than a portion of the blank in front thereof;
- applying a knurling process to the neck portion, such that at least a part of the neck portion becomes a knurled surface;
- forming a plurality of lands in the neck portion, by forming flutes separating the lands.

The method may include further steps, performed prior to, in between, or after the steps defined above. For example, the method may comprise forming a thread cutting portion including a plurality of thread cutting teeth in the blank. Other steps that may also be carried out when manufacturing the thread cutting tap is sintering (if the thread cutting tap is made of carbide) and coating.

### BRIEF DESCRIPTION OF DRAWINGS

The solution will now be described in more detail by means of exemplary embodiments and with reference to the accompanying drawings, in which:
Fig. 1 is a perspective view of a thread cutting tap according to an embodiment of the invention.
Fig. 2 is a side view of the thread cutting tap, including an enlarged view of a portion of the textured surface on the neck.
Fig. 3 illustrates a protrusion of the textured surface as seen in a direction towards the protrusion along its protrusion extension axis.
Fig. 4 shows a cross-section of the thread cutting tap in a section IV-IV indicated in Fig. 2, including an enlarged view of a single protrusion in such cross-section.
Fig. 5 is a flow chart illustrating a method for manufacturing a thread cutting tap according to the invention.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

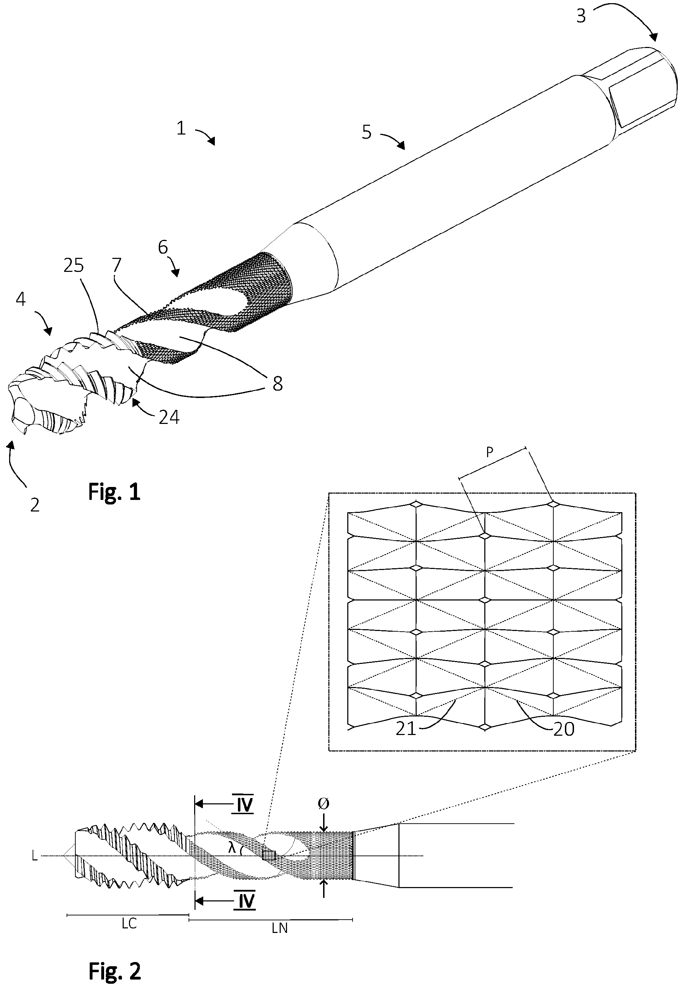

With reference to Figs. 1-4, a thread cutting tap 1 according to an embodiment of the invention will now be described.

The thread cutting tap 1 comprises a front end 2 and a rear end 3. A longitudinal axis L extends longitudinally through the thread cutting tap from the front end 2 to the rear end 3. A thread cutting portion 4 extends rearward from the front end 2. The thread cutting portion 4 includes cutting lands 24 including a plurality of thread cutting teeth 25 arranged to cut internal threads in a hole when the thread cutting tap is fed into the hole during rotational movement of the tap around the longitudinal axis L. The thread cutting portion 4 further includes flutes 8 separating the cutting lands. The flutes 8 extend with respect to the longitudinal axis at a helix angle λ (illustrated in fig. 2). The thread cutting tap comprises a shank 5 extending forward from the rear end 3. The shank 5 is adapted to be arranged to a tool holder (not shown), and for example coupled to a machine tool configured to perform a thread cutting operation.

A neck portion 6 is located between the shank 5 and the thread cutting portion 4. The neck portion 6 has a smaller diameter than the thread cutting portion, and is not meant to engage the workpiece during a thread cutting operation. The flutes 8 extends from the thread cutting portion 4 into the neck portion 6 in order to facilitate chip evacuation. Lands 7 are thus provided in the neck portion 6 between the flutes 8. In the illustrated embodiment, the flutes 8 do not extend over the full length of the neck portion 6, but only about 75% of the length.

The axial length LN of the neck portion 6 is greater than the axial length LC of the thread cutting portion 4.

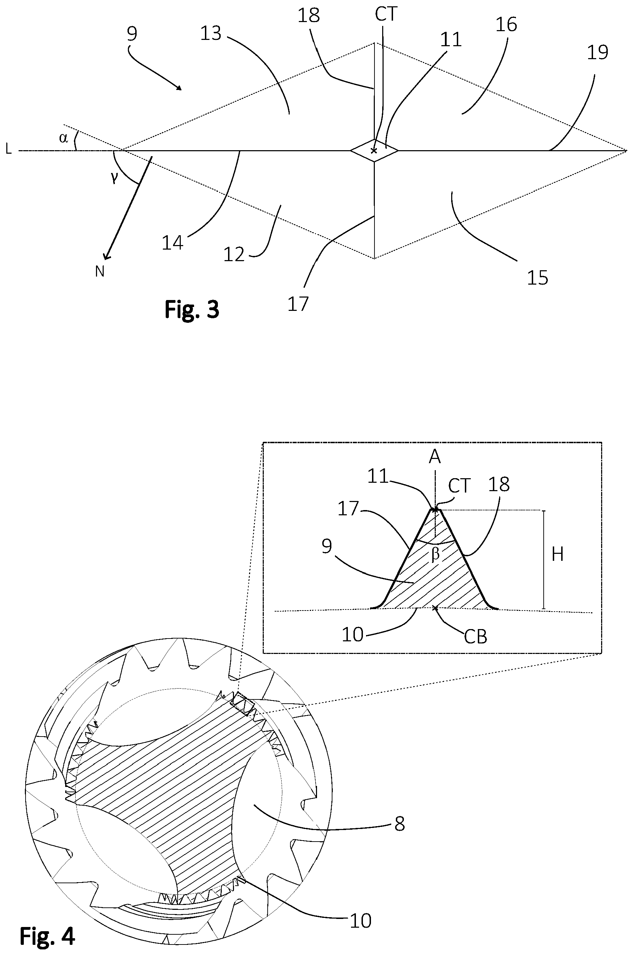

The lands 7 in the neck portion has a textured surface and comprises a plurality of protrusions 9. In the illustrated embodiment, the protrusions 9 completely cover all of the lands 7 in the neck portion 6, and also the part of the neck portion 6 extending rearward beyond the location where the flutes 8 end. Each protrusion 9 extend radially outwards from the neck portion along a protrusion extension axis A (illustrated in Fig. 4), which in this case is perpendicular to and intersects the longitudinal axis L of the thread cutting tap. Each protrusion 9 extends from a neck bottom 10 to a protrusion peak 11.

The diameter Ø of the neck portion, illustrated in Fig. 2, is the maximum diameter, i.e. the diameter at which the protrusion peaks 11 of the protrusions 9 are located.

The protrusions 9 are applied to the neck portion 6 using a knurling process, wherein a knurling tool forms right-hand trenches 20 and left-hand trenches 21 in the surface of the neck portion, schematically illustrated in dashed lines in the enlarged view in fig. 2.

Protrusions are thus formed in a pattern where the recurrence of the protrusions 11 corresponds to a pitch P, illustrated in the enlarged view of Fig. 2.

The resulting protrusions 9 have the shape of truncated pyramids, as best seen in Fig. 3, showing one of the protrusions in a plan view of the neck portion from a radial direction, and in Fig. 4, showing a section perpendicular to the longitudinal axis L. In the enlarged view in Fig. 4, the section of one of the protrusions is shown in further detail. In the illustrated embodiment, the protrusion has a height H, corresponding to the shortest distance between the neck bottom and the protrusion peak, i.e. in this case the distance from the neck bottom 10 to the protrusion peak 11 when measured along the protrusion extension axis A.

In the figures, the trenches are illustrated as having a helix angle α of about 23°, resulting in an angle 2α formed between a right-hand trench 20 and a left-hand trench 21 of about 46°. **In** another exemplary embodiment corresponding to a prototype of the thread cutting tap according to the invention, a M8 thread cutting tap with a neck diameter Ø of 6 mm was provided with protrusions using a knurling process resulting in a trench helix angle α of 30°, a pitch P of 1.5 mm, and a protrusion height H of 1.2 mm.

Each pyramid shaped protrusion includes four lateral surfaces of which a first surface 12 and a second surface 13 face forward, whereas a third surface 15 and a fourth surface 16 face rearward. In the illustrated embodiment, all four lateral surface 12, 13, 15, 16 are planar surfaces. In other embodiments, the lateral surfaces of a protrusion 9 may be slightly curved, e.g. convex.

As illustrated in Fig. 3, a normal N to the first surface or the second surface, when projected on a longitudinal plane perpendicular to a radial line through the protrusion (corresponding to the protrusion extension axis A in this case), forms an angle γ to the longitudinal axis L of the tap, which in the illustrated embodiment is about 67° (and would be 60° for the exemplary embodiment referred to above where the helix angle α of the trenches is 30°). At the intersection between the first surface 12 and the second surface 13, a first edge 14 is formed. In a similar manner, a second edge 17 is formed at the intersection between the first surface 12 and the third surface 15, a third edge 18 is formed at the intersection between the second surface 13 and the fourth surface 16, and a fourth edge 19 is formed at the intersection between the third surface 15 and the fourth surface 16. When projected on the longitudinal plane defined above, and as seen in Fig. 3, the first edge 14 and the fourth edge 19 extend in parallel with the longitudinal axis L of the thread cutting tap.

As illustrated in Fig. 4, the second edge 17 forms an internal angle β to the third edge 18, which in this case corresponds to the angle between the first surface 12 and the second surface 13, as well as the angle between the third surface 15 and the fourth surface 16. **In** the illustrated embodiment, the internal angle β is about 50°.

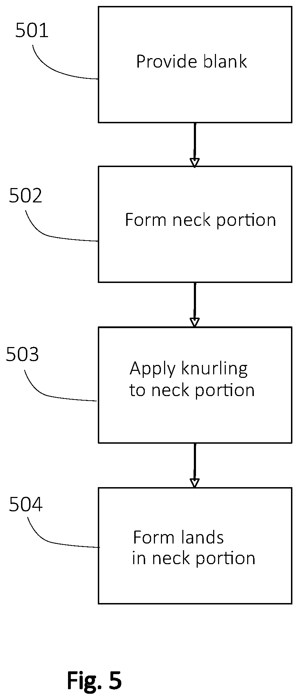

In the following, a method for manufacturing a thread cutting tap according to an embodiment of the invention is described with reference to Fig. 5.

In step 501, a blank is provided that includes a front end, a rear end and a peripheral surface, wherein the peripheral surface extends from the front end to the rear end around a central longitudinal axis. Accordingly, the blank may be a circular cylindrical body, for example made of high-speed steel.

In step 502, a neck portion is formed in the blank, the neck portion having a smaller diameter than a portion of the blank in front thereof. This is for example achieved by turning or grinding the blank. Thereby, the portion in front of the neck portion, that will include thread cutting teeth, will be located at a greater diameter than the neck portion.

In step 503, a knurling process is applied to the neck portion, such that at least a part of the surface of the neck portion becomes a knurled surface. Preferably, the whole neck portion is knurled. The knurling may be achieved using a knurling tool, for example arranged on a lathe. As an example, the knurling tool may include two wheels or rollers with teeth extending diagonally (left-handed for one roller and right-handed for the other roller) across the surface of the rollers. Such knurling tool is caused to engage the blank while the blank is rotated, such that one roller presses against the blank from one side and the other roller from the other side. The rollers will thereby rotate in contact with the rotating blank and form diamond shaped protrusions in the surface of the neck portion.

In step 504, a plurality of lands are formed in the neck portion, by forming flutes separating the lands.

The flutes, for example formed by grinding, are preferably formed also in the thread cutting portion in the same operation. As a consequence of forming the flutes, some parts of the knurled surface in the neck portion are removed, but the knurled surface will remain in other regions, including the lands between the flutes.

Although the description above contains a plurality of specificities, these should not be construed as limiting the scope of the invention but as merely providing illustrations of some exemplifying embodiments of the described invention. It will be appreciated that the scope of the presently described invention fully encompasses other embodiments which may become obvious to those skilled in the art, and that the scope of the presently described invention is accordingly not to be limited but by the appended claims.

## Claims

1. A thread cutting tap (1), comprising
- a front end (2),
- a rear end (3),
- a longitudinal axis (L) extending from the front end (2) to the rear end (3),
- a thread cutting portion (4) extending rearward along the longitudinal axis (L) from the front end (2),
- a shank (5) extending forward along the longitudinal axis (L) from the rear end (3),
- a neck portion (6) located between the thread cutting portion (4) and the shank (5), wherein the neck portion (6) comprises a plurality of lands (7) separated from each other by a corresponding number of flutes (8),
**characterized in that** at least a part of at least one of the lands (7) in the neck portion (6) has a textured surface comprising a plurality of protrusions (9), each protrusion extending radially outwards from a neck bottom (10) to a protrusion peak (11).

2. A thread cutting tap according to claim 1, wherein the textured surface covers a major part of each land in the neck portion.

3. A thread cutting tap according to any of the previous claims, wherein each protrusion (9) comprises a first surface (12) and a second surface (13), adjoining each other at a first edge (14) extending from the neck bottom (10) to the protrusion peak (11).

4. A thread cutting tap according to claim 3, wherein the first surface and the second surface face forward, and wherein each protrusion further comprises a third surface (15) and a fourth surface (16) each facing rearward, wherein the first surface adjoins the third surface at a second edge (17) extending from the neck bottom to the protrusion peak, and the second surface adjoins the fourth surface at a third edge (18) extending from the neck bottom to the protrusion peak.

5. A thread cutting tap according to any of the claims 3-4, wherein the first surface forms an internal angle (β) of 30°-90° to the second surface.

6. A cutting tap according to claim 4-5, wherein each protrusion has the shape of a truncated pyramid having a square or rhombic bottom base at the neck bottom and a top base at the protrusion peak and wherein the first, second, third and fourth surfaces make up the lateral faces of the truncated pyramid, and wherein the protrusion extends along a protrusion extension axis (A) from the centroid (CB) of the bottom base to the centroid (CT) of the top base.

7. A thread cutting tap according to any of the previous claims, wherein a protrusion height (H) of each protrusion, corresponding to the minimum distance between the neck bottom to the protrusion peak, is within a range of 0.05-0.35 times the diameter (Ø) of the neck portion.

8. A thread cutting tap according to any of the previous claims, wherein all, or substantially all, of the protrusions have the same size and shape and are distributed over the textured surface in a pattern.

9. A thread cutting tap according to claim 8, wherein the pattern is defined by a recurrence of the protrusions at a pitch (P) of 0.1-0.5 times the diameter of the neck portion.

10. A thread cutting tap according to claim 9, wherein the protrusion height (H) of each protrusion is 0.5 - 0.8 times the pitch.

11. A thread cutting tap according to any of the claims 8-10, wherein the pattern of the textured surface is formed by two sets of trenches (20, 21), the two sets extending along the neck portion helicoidally, but in different directions, around the longitudinal axis of the thread cutting tap, such that a trench (20) of the first set intersects a trench (21) of the second set at an angle (2α) of 30°-120°, and wherein the regions between the respective trenches form the protrusions.

12. A thread cutting tap according to any of the previous claims, wherein the flutes extend with respect to the longitudinal axis at a helix angle (λ) of 30° or more.

13. A thread cutting tap according to any of the previous claims, wherein the axial length (LN) of the neck portion is greater than the axial length (LC) of the thread cutting portion.

14. A thread cutting tap according to any of the previous claims, wherein the textured surface is a knurled surface.

15. A method for manufacturing a thread cutting tap according to claim 14, wherein the method comprises the steps of:
- providing (501) a blank that includes
- a front end,
- a rear end, and
- a peripheral surface, wherein the peripheral surface extends from the front end to the rear end around a central longitudinal axis;
- forming (502) a neck portion in the peripheral surface of the blank, the neck portion having a smaller diameter than a portion of the blank in front thereof;
- applying (502) a knurling process to the neck portion, such that at least a part of the neck portion becomes a knurled surface;
- forming (504) a plurality of lands in the neck portion, by forming flutes separating the lands.

## Patentansprüche

1. Gewindeschneidbohrer (1), umfassend
- ein vorderes Ende (2),
- ein hinteres Ende (3),
- eine Längsachse (L), die sich von dem vorderen Ende (2) zu dem hinteren Ende (3) erstreckt,
- einen Gewindeschneidabschnitt (4), der sich entlang der Längsachse (L) von dem vorderen Ende (2) nach hinten erstreckt,
- einen Schaft (5), der sich entlang der Längsachse (L) von dem hinteren Ende (3) nach vorne erstreckt,
- einen Halsabschnitt (6), der sich zwischen dem Gewindeschneidabschnitt (4) und dem Schaft (5) befindet, wobei der Halsabschnitt (6) mehrere Stege (7) umfasst, die durch eine entsprechende Anzahl von Nuten (8) voneinander getrennt sind,
**dadurch gekennzeichnet, dass** mindestens ein Teil von mindestens einem der Stege (7) in dem Halsabschnitt (6) eine strukturierte Oberfläche aufweist, die eine Vielzahl von Vorsprüngen (9) umfasst, wobei sich jeder Vorsprung radial nach außen von einem Halsgrund (10) zu einer Vorsprungsspitze (11) erstreckt.

2. Gewindeschneidbohrer nach Anspruch 1, wobei die strukturierte Oberfläche einen Großteil jedes Stegs im Halsabschnitt bedeckt.

3. Gewindeschneidbohrer nach einem der vorstehenden Ansprüche, wobei jeder Vorsprung (9) eine erste Oberfläche (12) und eine zweite Oberfläche (13) aufweist, die an einer ersten Kante (14) aneinandergrenzen, die sich vom Halsgrund (10) bis zur Vorsprungsspitze (11) erstreckt.

4. Gewindeschneidbohrer nach Anspruch 3, wobei die erste Fläche und die zweite Fläche nach vorne zeigen und wobei jeder Vorsprung ferner eine dritte Fläche (15) und eine vierte Fläche (16) umfasst, die jeweils nach hinten zeigen, wobei die erste Fläche an einer zweiten Kante (17), die sich vom Halsgrund bis zur Vorsprungsspitze erstreckt, an die dritte Fläche angrenzt und die zweite Fläche an einer dritten Kante (18) an die vierte Fläche angrenzt, die sich vom Halsgrund bis zur Vorsprungsspitze erstreckt.

5. Gewindeschneidbohrer nach einem der Ansprüche 3-4, wobei die erste Fläche einen Innenwinkel (β) von 30° bis 90° zur zweiten Fläche bildet.

6. Gewindeschneidbohrer nach Anspruch 4-5, wobei jeder Vorsprung die Form einer abgestumpften Pyramide mit einer quadratischen oder rhombischen Grundfläche am Halsgrund und einer oberen Grundfläche an der Vorsprungsspitze aufweist und wobei die erste, zweite, dritte und vierte Fläche die Seitenflächen der abgestumpften Pyramide bilden und wobei sich der Vorsprung entlang einer Vorsprungserstreckungsachse (A) vom Schwerpunkt (CB) der unteren Grundfläche zum Schwerpunkt (CT) der oberen Grundfläche erstreckt.

7. Gewindeschneidbohrer nach einem der vorstehenden Ansprüche, wobei eine Vorsprungshöhe (H) jedes Vorsprungs, die dem Mindestabstand zwischen dem Halsgrund und der Vorsprungsspitze entspricht, in einem Bereich von 0,05 bis 0,35 mal dem Durchmesser (Ø) des Halsabschnitts liegt.

8. Gewindeschneidbohrer nach einem der vorstehenden Ansprüche, wobei alle oder im Wesentlichen alle Vorsprünge die gleiche Größe und Form aufweisen und in einem Muster über die strukturierte Oberfläche verteilt sind.

9. Gewindeschneidbohrer nach Anspruch 8, wobei das Muster durch eine Wiederholung der Vorsprünge in einem Abstand (P) von 0,1 bis 0,5 mal dem Durchmesser des Halsabschnitts definiert ist.

10. Gewindeschneidbohrer nach Anspruch 9, wobei die Höhe (H) jedes Vorsprungs das 0,5- bis 0,8-fache des Abstands beträgt.

11. Gewindeschneidbohrer nach einem der Ansprüche 8 bis 10, wobei das Muster der strukturierten Oberfläche durch zwei Sätze von Gräben (20, 21) gebildet wird, wobei sich die beiden Sätze spiralförmig, jedoch in unterschiedlichen Richtungen, um die Längsachse des Gewindeschneidbohrers entlang des Halsabschnitts erstrecken, so dass eine Rille (20) des ersten Satzes eine Rille (21) des zweiten Satzes in einem Winkel (2α) von 30° bis 120° schneidet, und wobei die Bereiche zwischen den jeweiligen Rillen die Vorsprünge bilden.

12. Gewindeschneidbohrer nach einem der vorstehenden Ansprüche, wobei sich die Nuten in Bezug auf die Längsachse in einem Schraubenwinkel (λ) von 30° oder mehr erstrecken.

13. Gewindeschneidbohrer nach einem der vorstehenden Ansprüche, wobei die axiale Länge (LN) des Halsabschnitts größer ist als die axiale Länge (LC) des Gewindeschneidabschnitts.

14. Gewindeschneidbohrer nach einem der vorstehenden Ansprüche, wobei die strukturierte Oberfläche eine gerändelte Oberfläche ist.

15. Verfahren zur Herstellung eines Gewindeschneidbohrers nach Anspruch 14, wobei das Verfahren die folgenden Schritte umfasst:
- Bereitstellen (501) eines Rohlings, der
- ein vorderes Ende,
- ein hinteres Ende und
- eine Umfangsfläche umfasst, wobei sich die Umfangsfläche von dem vorderen Ende zu dem hinteren Ende um eine zentrale Längsachse erstreckt;
- Ausbilden (502) eines Halsabschnitts in der Umfangsfläche des Rohlings, wobei der Halsabschnitt einen kleineren Durchmesser als ein Abschnitt des Rohlings davor aufweist;
- Durchführen (502) eines Rändelungsprozesses an dem Halsabschnitt, so dass mindestens ein Teil des Halsabschnitts zu einer gerändelten Oberfläche wird;
- Ausbilden (504) einer Vielzahl von Stegen im Halsabschnitt durch Ausbilden von Nuten, die die Stege trennen.

## Revendications

1. Taraud à fileter (1), comprenant
- une extrémité avant (2),
- une extrémité arrière (3),
- un axe longitudinal (L) qui s'étend de l'extrémité avant (2) à l'extrémité arrière (3),
- une portion de filetage (4) qui s'étend vers l'arrière le long de l'axe longitudinal (L) à partir de l'extrémité avant (2),
- une queue (5) qui s'étend vers l'avant le long de l'axe longitudinal (L) à partir de l'extrémité arrière (3),
- une portion de col (6) située entre la portion de filetage (4) et la queue (5),
dans laquelle la portion de col (6) comprend une pluralité de listels (7) séparés les uns des autres par un nombre correspondant de goujures (8),
**caractérisé en ce qu'**au moins une partie d'au moins un des listels (7) de la portion de col (6) présente une surface texturée comprenant une pluralité de saillies (9), chaque saillie s'étendant radialement vers l'extérieur à partir d'un fond du col (10) jusqu'à un sommet de la saillie (11).

2. Taraud à fileter selon la revendication 1, dans lequel la surface texturée recouvre une majeure partie de chaque listel de la portion de col.

3. Taraud à fileter selon l'une quelconque des revendications précédentes, dans lequel chaque saillie (9) comprend une première surface (12) et une seconde surface (13), qui sont adjacentes l'une à l'autre au niveau d'une première arête (14) qui s'étend du fond du col (10) jusqu'au sommet de la saillie (11).

4. Taraud à fileter selon la revendication 3, dans lequel la première surface et la seconde surface sont orientées vers l'avant, et dans lequel chaque saillie comprend en outre une troisième surface (15) et une quatrième surface (16) chacune orientée vers l'arrière, la première surface étant adjacente à la troisième surface au niveau d'une seconde arête (17) qui s'étend du fond du col jusqu'au sommet de la saillie, et la seconde surface étant adjacente à la quatrième surface au niveau d'une troisième arête (18) qui s'étend du fond du col jusqu'au sommet de la saillie.

5. Taraud à fileter selon l'une quelconque des revendications 3 à 4, dans lequel la première surface forme un angle interne (ß) de 30° à 90° avec la seconde surface.

6. Taraud à fileter selon l'une quelconque des revendications 4 à 5, dans lequel chaque saillie a la forme d'une pyramide tronquée ayant une base inférieure carrée ou rhombique au niveau du fond du col et une base supérieure au niveau du sommet de la saillie, et dans lequel les première, seconde, troisième et quatrième surfaces constituent les faces latérales de la pyramide tronquée, et dans lequel la saillie s'étend le long d'un axe d'extension de la saillie (A) du centroïde (CB) de la base inférieure au centroïde (CT) de la base supérieure.

7. Taraud à fileter selon l'une quelconque des revendications précédentes, dans lequel une hauteur de la saillie (H) de chaque saillie, correspondant à la distance minimale entre le fond du col et le sommet de la saillie, est comprise dans une plage de 0,05 à 0,35 fois le diamètre (Ø) de la portion de col.

8. Taraud à fileter selon l'une quelconque des revendications précédentes, dans lequel toutes, ou sensiblement toutes, les saillies ont la même taille et la même forme et sont réparties sur la surface texturée selon un motif.

9. Taraud à fileter selon la revendication 8, dans lequel le motif est défini par une récurrence des saillies à un pas (P) de 0,1 à 0,5 fois le diamètre de la portion de col.

10. Taraud à fileter selon la revendication 9, dans lequel la hauteur de la saillie (H) de chaque saillie est de 0,5 à 0,8 fois le pas.

11. Taraud à fileter selon l'une quelconque des revendications 8 à 10, dans lequel le motif de la surface texturée est formé par deux ensembles de rainures (20, 21), les deux ensembles s'étendant le long de la portion de col de manière hélicoïdale, mais dans des directions différentes, autour de l'axe longitudinal du taraud à fileter, de sorte qu'une rainure (20) du premier ensemble croise une rainure (21) du second ensemble selon un angle (2α) de 30° à 120°, et dans lequel les régions entre les rainures respectives forment les saillies.

12. Taraud à fileter selon l'une quelconque des revendications précédentes, dans lequel les goujures s'étendent par rapport à l'axe longitudinal selon un angle d'hélice (λ) de 30° ou plus.

13. Taraud à fileter selon l'une quelconque des revendications précédentes, dans lequel la longueur axiale (LN) de la portion de col est supérieure à la longueur axiale (LC) de la portion de filetage.

14. Taraud à fileter selon l'une quelconque des revendications précédentes, dans lequel la surface texturée est une surface moletée.

15. Procédé de fabrication d'un taraud à fileter selon la revendication 14, dans lequel le procédé comprend les étapes consistant à :
- fournir (501) une ébauche qui comprend
- une extrémité avant,
- une extrémité arrière, et
- une surface périphérique, la surface périphérique s'étendant de l'extrémité avant à l'extrémité arrière autour d'un axe longitudinal central ;
- former (502) une portion de col dans la surface périphérique de l'ébauche, la portion de col ayant un diamètre inférieur à celui d'une portion de l'ébauche située en avant de celle-ci ;
- appliquer (502) une opération de moletage à la portion de col, de sorte qu'au moins une partie de la portion de col devienne une surface moletée ;
- former (504) une pluralité de listels dans la portion de col, en formant des goujures séparant les listels.
